# EUROPEAN PATENT SPECIFICATION

(11) **EP 3 363 835 B1**
(45) Date of publication and mention of the grant of the patent: **11.10.2023**
(21) Application number: 17156808.2
(22) Date of filing: 20.02.2017
(51) Int. Cl.: C08F 293/00, B05D 5/00, B05D 1/18, B05D 1/36, B26B 21/40, B26B 21/52, C08J 7/16

(54) **ARTICLE COMPRISING A POLYMER LAYER**
ARTIKEL MIT EINER POLYMERSCHICHT
ARTICLE COMPRENANT UNE COUCHE POLYMÈRE

(43) Date of publication of application: 22.08.2018
(73) Proprietor: The Gillette Company LLC, Boston, MA 02127 (US)
(72) Inventor: SNOW, John Francis Timothy Barter, Bristol, BS34 5AR (GB); BRISCOE, Wuge Henry, Bristol, BS34 5AR (GB); Stephens, Alison Fiona, Egham, Surrey TW20 9NW (GB); BAXTER, Elaine Alice Marie, Egham, Surrey, TW20 9NW (GB)
(74) Representative: P&G Patent Germany

(56) References cited:
- EP-A1- 1 754 731
- CN-A- 106 366 182
- US-A1- 2014 235 755
- US-B1- 7 303 821

## Description

### FIELD OF THE INVENTION

The invention relates generally to the field of applying polymer layers to substrates, in particular to applying polymer layers to consumer articles.

### BACKGROUND OF THE INVENTION

It is well known to apply exterior layers, coatings, or films of polymer to the surface of articles in order to improve upon the interfacial properties of an underlying bulk substrate. That is, typically, the bulk substrate of an article may be formed of a common or inexpensive material or from a material having particular physical characteristics. Since the inherent interfacial characteristics of the substrate material may be less than optimal (e.g. the article surface interface with human skin), a layer, coating or film of polymer can be applied to improve upon these. This is, for example, well known in the field of paints, in which a coating of paint masks the properties of the underlying substrate's surface, thus improving functionality and/or appearance.

It is often desirable in the field of consumer items (such as consumer articles and packaging for consumer articles) that the bulk material from which an article is formed is commonly available, inexpensive, readily workable/formable, of environmentally low impact, recyclable, biodegradable, and/or afforded with any of a plethora of other desirable characteristics. However, the interfacial properties associated with such substrate materials are often sub-optimal. For example, they may provide a less than desirable consumer touch experience, may be susceptible to corrosion or other degradation, and/or may be susceptible to microbe growth, etc.

While much progress has been made in the art of providing surface modification to substrates, there remains a need for new and preferably improved modification layers and techniques to apply them.

US 2014/0235755 discusses provision of crosslinkable random copolymers comprising atom transfer radical polymerization (ATRP) initiators and crosslinked copolymer films. The random copolymers are polymerized from one or more alkyl halide functional inimers and one or more monomers having a crosslinkable functionality, and have pendant ATRP initiating groups.

US7,303,821 discusses a chemically coated surface for application in electrophoretic separation, and a process involving: contacting a support surface with a coupling agent solution, then contacting the support surface with a living radical polymerizing solution.

### DISCUSSION OF THE INVENTION

According to the present invention, there is provided an article, wherein
said article is a shaving article or a hair removal device, comprising,
a substrate having a charged surface; and
a polymer layer on said substrate surface; wherein
said polymer layer comprises a crosslinked sublayer comprising charged moieties with a charge opposite to that of said charged surface; and a supra-layer comprising polymer chains grafted from the sublayer.

An advantage of the invention can relate to the provision of a polymer layer on a substrate, the polymer layer being attached via a versatile and effective technique that has the potential to allow ready surface modification of substrates of various materials and various surface shapes, e.g. planar, contoured or curved etc.

While it may be understood that use of ionic attraction to constrain a coating to a substrate surface may be generally a less robust route to fixation than the use of covalent bonding, the present inventors have succeeded in improving the versatility of an ionic attachment route.

As mentioned above, the polymer layer of the present invention comprises a crosslinked sublayer having charged moieties with a charge opposite to that of the charged substrate surface. The provision of a crosslinked sublayer with a plurality of charged moieties forming ionic attraction, attachment points to the substrate surface is believed to provide a robust attachment to the surface because of the accumulated attractive force of a plurality of charged groups in the crosslinked sublayer. Advantageously, this robust attachment can be achieved without a need to resort to covalent bonding by chemical reaction with a substrate surface.

In a preferred embodiment the crosslinked sublayer is a two-dimensional polymer mat provided with a plurality of charged moieties and polymerization initiation moieties such as a halide. The charged groups facilitate ready anchorage of the mat to the substrate surface by simple adsorption to the charged interface, whilst the exemplary halide groups can facilitate grafting of polymer chains from the mat using ATRP.

While the crosslinked sublayer forms an anchoring layer to the substrate surface for the polymer layer, a modification of the article's interfacial properties is provided by the polymer chains that are grafted from the crosslinked sublayer. That is, polymer chains are anchored by one end to the crosslinked sublayer (that is, they terminally attach to the crosslinked sublayer at a point of polymerization initiation) and then grown by polymerization.

In preferred embodiments of the invention, the polymer chains are polymer brushes. That is, the grafted polymer chains are in a brush conformation. Polymer brushes are polymer chains that are anchored at one end to the crosslinked sublayer (that is, terminally attached to the crosslinked sublayer) and that extend generally perpendicularly away from the substrate surface. The polymer chains become polymer brushes when grafted upon a surface at a sufficiently high density to take a brush conformation. The brush-like conformation of the polymer brushes emerges due to repulsive interactions between neighbouring chains. That is, the relationship between the spacing between the chains, s, and the chain length expressed as the `radius of gyration', *rg* (the radius of gyration refers to the square root of the extended chain length). The '*brush*' conformation is described as a regime where the spacing between the chains is less than twice the polymer *rg* , when the chains extend away from the surface. In the present application, an individual polymer chain within a multitude of polymer chains in the brush configuration, is referred to as a polymer brush.

Addition of polymer brushes chemically grafted from a substrate have been found by the inventors to be an effective method of surface modification.

The nature of the available modifications that may be imparted to a substrate by polymer chains, such as polymer brushes, is expansive, as is further expanded upon in this document. For example, the polymer chains may impart any one or more of a range of differing modified characteristics such as modifying roughness, wetting, surface charge, surface energy, adhesion, reactivity, and friction properties of the substrate. In particular, the polymer chains may be lubricious, hydrophilic, hydrophobic, lypophilic, lypophobic, amphiphilic, nonionic, anionic, cationic, zwitterionic or amphoteric.

In a further aspect of the invention there is provided a method of making an article, wherein said article is a shaving article or a hair removal device, comprising a substrate with an external polymer coating comprising polymer chains, the method comprising the steps of:
a) providing a substrate comprising a charged surface;
b) providing a crosslinked polymer comprising polymerization initiation moieties and charged moieties having a charge opposite to that of said charged surface;
c) applying said crosslinked polymer to said substrate surface;
d) providing monomers reactive for polymerization with the polymerization initiation moieties; and
e) polymerizing the monomers with the polymerization initiation moieties.

In a further aspect of the invention there are provided articles obtainable by the method discussed above.

### CONSUMER ARTICLES

Articles in accordance with the invention are shaving articles and hair removal devices. "Hair removal devices" comprise any apparatus or device intended to remove hair, such as a razor (manual or powered) for dry or wet shaving, epilator, electric shaver, and combinations thereof. Shaving articles include articles that are associated with the act of shaving a body part, and include hair removal devices and components of hair removal devices. "Shaving articles" may be non-cutting elements or cutting elements. Non-cutting elements can be cartridge or handle components, such as blade clips in a wet shaver or outer or inner surfaces of a foil disposed in an electric dry shaver. Cutting elements include cutter elements in an electric dry shaver or razor blades in a wet shaver product, including wet shave razors.

### WET SHAVE RAZOR

In preferred embodiments the article of the invention is a wet shave razor or a component thereof. Wet shave razors typically include a razor cartridge and a razor handle.

### RAZOR CARTRIDGE

Razor cartridge components typically include some of the following elements: one or more razor blades having a blade edge to perform the cutting of hair, a blade clip, a lubricating body/strip/ring, a cap, a housing, a frame, a guard, a handle connecting structure, or any number of each or combination thereof.

Typically the razor blades have a stainless steel substrate that is optionally coated. Blade clips are typically formed of a metal, such as aluminium.

The lubricating body/strip/ring, cap, housing, frame, guard, and handle connecting structure comprise some combination of elastomeric and hard plastic materials. In particular the cap, housing, frame, guard, and/or handle connecting structure may be formed from semi-rigid polymeric materials, preferably by injection molding. Exemplary materials include polystyrene, and blends of polystyrene with other polymers. For example polyphenylene oxide blends with polystyrene, an example of which is commercially available as Noryl^{™}. Other semi-rigid polymers that are suitable include, but are not limited to, acrylonitrile butadiene styrene (ABS), acetal, polypropylene, high impact polystyrene, or any combinations thereof. Plastics having a Shore A hardness of about 60 to 140 are preferred.

In some preferred examples, the guard may be molded from softer materials, for example, from materials having a shore A hardness of about 20 to about 70, such as thermoplastic elastomers (TPEs) or rubbers.

Razor cartridge components have exterior surfaces, many of which contact a user's skin during shaving. The interaction of these contacting surfaces with skin may generally play a significant role in the performance of the razor.

For example, it may be desirable that razor blades (especially their sharp edges), frame surfaces, clip(s), and the cap have a low coefficient of friction with a user's skin or hair for comfort of use, ease of hair cutting (e.g. a low cutter-force) and skin manipulation (e.g. manipulation of skin bulge).

For example, a razor blade with a low coefficient of friction can exhibit reduced cutting forces for beard hairs or other types of hair fibers. A reduced cutting force can significantly improve shaving attributes including sensory perceptions (safety, closeness and comfort). The concept of cutting force can be generally understood as how readily a blade passes through a hair stem during cutting.

Providing non-cutting elements of a cartridge, especially those to the rear or adjacent the blades (e.g. blade clips, frame, housing, cap, etc.), with skin contact surfaces having a lower coefficient of friction can aid the shaving performance of a razor. For example blade retention clips, housings, caps etc. with lower coefficients of friction can glide more comfortably across a user's skin, reducing skin pull or improving skin manipulation.

In a particularly preferred embodiment of the invention, the polymer layer is applied to at least a portion of the cap of a razor cartridge. A ready glide of the cap across the skin of a user may aid in avoiding excessive skin bulge into the line of the foregoing razor blades, helping to reduce cuts, nicks and irritation, and improving user comfort.

Additionally, providing non-cutting elements of a cartridge, especially those forward of the blades (e.g. the guard) with skin contact surfaces having a higher coefficient of friction can aid the shaving performance of a razor. For example, an increased coefficient of friction for components forward of the blades can aid in `gripping' the skin as a user shaves, thereby manipulating the skin and skin bulge during a shaving stroke.

In line with the above discussion, an aspect of the invention concerns the desire to improve or enhance the shaving performance of wet shave razor cartridges, preferably by provision of new and preferably optimized surface enhancing coatings and/or methods of applying such coatings.

### HANDLE

Wet shave razor handles are also provided with multiple surfaces that are contacted by a user's skin (e.g. hands on a grip) during use, and in one aspect, the invention is also concerned with the improvement of the interfacial surface properties of razor handles.

Razor handles may comprise buttons, a handle grip, a cartridge connecting structure, or any combination thereof. Typically the handle components may be formed of some combination of elastomeric and hard plastic materials. The handle may be formed from, semi-rigid polymeric materials, preferably by injection molding. Exemplary materials include polystyrene, and blends of polystyrene with other polymers. For example polyphenylene oxide blends with polystyrene, an example of which is commercially available as Noryl^{™}. Other semi-rigid polymers that are suitable include, but are not limited to, acrylonitrile butadiene styrene (ABS), acetal, polypropylene, high impact polystyrene, or any combinations thereof. Plastics having a Shore A hardness of about 60 to 140 are preferred.

Razor handles may also comprise metallic parts, for example, stainless steel parts. Razor handle surfaces may comprise polymer components including anti-slip, rubber or elastomer type materials or coatings for better gripping, they may also comprise stainless steel surfaces, the inherent surface properties of which can also be optimized. It may be desirable to provide alternatives to the rubber or elastomer type materials in order to achieve anti-slip characteristics for the handle surfaces, to improve the feel of metal handle components, and or to impart further properties to the handle surfaces, such as anti-fouling and/or biocidal properties.

In line with the above discussion, an aspect of the invention concerns the desire to improve or enhance the shaving performance of wet shave razor handles, preferably by provision of new and preferably optimized surface enhancing coatings and/or methods of applying such coatings.

### POLYMER LAYER

### CROSSLINKED SUBLAYER

The crosslinked sublayer comprising charged moieties with a charge opposite to that of the charged surface preferably comprises a two dimensionally extended network of linked polymer chains. The sublayer may also be referred to as a polymer mat.

As mentioned, the sublayer is provided with charged moieties that are ionically attracted to the surface of the substrate, said surface substrate carrying a charge opposite to the charged moieties of the crosslinked sublayer.

Preferably the charged moieties of the crosslinked sublayer are cationic moieties or precursors thereof, and provide attraction to substrate surfaces that are negatively charged. Examples of useful cationic moieties include quaternary ammonium moieties or precursors thereof. Specific exemplary monomers carrying cationic moieties and suitable for polymerization into a crosslinked sublayer are (meth)acrylate monomers carrying quaternary ammonium moieties. Polyethylene glycol (meth)acrylate monomers may be preferred for dispersibility in water. One specific example of a suitable monomer is PEG-N⁺, described in the examples section of this document.

While it is preferred that the substrate surface carries a negative charge, it is also possible that substrate surfaces may carry a positive charge. In the case of a positively charged substrate surface, the charged moieties of the crosslinked sublayer are negatively charged. To achieve this, anionic moieties can be incorporated into the crosslinked sublayer during polymerization of the sublayer. Examples of useful anionic moieties include phosphonates and sulphates, or precursors thereof. Exemplary monomers carrying anionic moieties and suitable for polymerization into a crosslinked sublayer include: vinylphosphonic acid, foscarnet coupled to PEGMA; and PEG sulphonates such as mPEG-Mesylate.

The crosslinked sublayer comprises a plurality of charged moieties. This provides multiple points of attraction of the crosslinked sublayer to the charged surface. In general terms, increasing the concentration of charged moieties, or monomers carrying them, in the polymer improves anchorage of the crosslinked sublayer on the surface. This may beneficially increase adhesion to substrate surfaces, especially those that have only weak charge.

Preferably the crosslinked sublayer comprises from 10 to 95 wt% of monomers carrying at least one charged moiety or precursor thereof, based on the weight of the crosslinked sublayer, more preferably from 15 to 95 wt%, still more preferably from 25wt% to 90 wt%, more preferably from 45 to 85 wt%, most preferably from 50 to 85 wt%. Preferably the crosslinked sublayer comprises about 75wt% of monomers carrying at least one charged moiety or precursor thereof, based on the weight of the crosslinked sublayer.

In addition to the charged moieties for attraction to the oppositely charged substrate surface, the crosslinked sublayer also comprises polymerization initiation groups or moieties, forming grafting points for polymer chains to be grafted therefrom.

A variety of polymerization reaction mechanisms can be used to graft polymer brushes from the crosslinked polymer sublayer. Examples include ring opening metathesis polymerization (ROMP); reversible addition fragmentation chain transfer polymerisation (RAFT); Nitroxide-mediated polymerization (NMP); and atom transfer radical polymerisation (ATRP). The pool of available initiation moieties is expansive and the initiator moieties can be selected as appropriate for a selected polymerization reaction.

In the present invention, the preferred polymerization technique is ATRP, and may be ARGET (activators regenerated by electron transfer) ATRP.

Preferred polymerization initiation groups for ATRP include alkyl halides, particularly wherein the halide is selected from the group consisting of Br and Cl. The halide can act as a leaving group enabling the polymerization to proceed.

Specific exemplary monomers carrying free-radical polymerization initiation moieties and suitable for polymerization into a crosslinked sublayer are (meth)acrylate monomers carrying halides. Polyethylene glycol (meth)acrylate monomers may be preferred for dispersibility in water. One specific example of a suitable monomer is PEG-Cl, described in the examples section of this document.

In general, increasing the concentration of polymerization initiation moieties, or monomers carrying such moieties, within the crosslinked sublayer may increase the grafting density of polymer chains subsequently grafted therefrom.

Preferably the crosslinked sublayer comprises from 5 to 90 wt% of monomers carrying at least one polymerization initiation moiety, based on the weight of the crosslinked sublayer, more preferably from 10 to 80 wt%, still more preferably from 10 wt% to 80 wt%, more preferably from 15 to 55 wt%, most preferably from 20 to 55 wt%. Preferably the crosslinked sublayer comprises about 25 wt% of monomers carrying at least one polymerization initiation moiety, based on the weight of the crosslinked sublayer.

Control and/or optimization of the ionic anchorage and polymer grafting density can also be achieved through variation of the molar ratio between the charge carrying monomers and the polymerization initiation monomers making up the crosslinked sublayer. It has been found that a good performance of the crosslinked sublayer in terms of substrate surface binding and polymer chain growth is achieved when the crosslinked sublayer has a molar ratio of charged moieties to polymerization initiation moieties in a preferred range. Useful molar ratios charged moieties to polymerization initiation moieties in the crosslinked sublayer are from about 1:10 to about 10:1, more preferably from about 1:5 to about 8:1, still more preferably from about 1:1 to about 5:1, still more preferably about 2:1 to about 4:1 and most preferably about 3:1. Crosslinked sublayers with the latter molar ratio demonstrate uniform surface coatings with a suitable number of polymerization initiation points for polymer chain grafting, preferably polymer brush grafting.

The crosslinked sublayer also comprises a cross-linker. The cross-linker links between polymer chains to form a polymer network that is two-dimensional. Suitable cross-linkers are poly-functional monomers, preferably bifunctional monomers.

Where the crosslinked sublayer is formed from (meth)acrylate monomers, the cross-linker is preferably a di(meth)acrylate.

Examples of crosslinkers include ethylene glycol diacrylate, di(ethylene glycol) diacrylate, tetra(ethylene glycol) diacrylate, ethylene glycol dimethacrylate, di(ethylene glycol) dimethacrylate, tri(ethylene glycol) dimethacrylate, *N,N.-* Methylenebisacrylamide, *N*,*N*.-Methylenebisacrylamide, *N,N.-* (1,2-Dihydroxyethylene)bisacrylamide, *N-* (1-Hydroxy-2,2-dimethoxyethyl)acrylamide, divinylbenzene, and mixtures thereof.

A particularly preferred crosslinker is ethyleneglycol dimethacrylate, present as a crosslinking agent, which has been found to produce a cross-linked network with a tunable molecular weight, using 1-dodecanethiol as a chain transfer agent.

The sublayer preferably comprises from 0.5 to 5 wt % of crosslinker, more preferably from 0.7 to 4 wt%, more preferably from 1 to 3 wt% and most preferably from 1.0 to 2.5 wt%, based on the weight of the crosslinked sublayer. Most preferably the crosslinked sublayer comprises about 2 wt% crosslinker.

The crosslinked sublayer preferably has a Mw in the range from 5000 to 400,000 Da, more preferably from 10,000 to 200,000 Da, still more preferably 15,000 to 100,000 Da.

### SUBSTRATE SURFACE

The surface to which the crosslinked polymer sublayer is ionically bound comprises a charged surface. The substrate surface may carry either a net negative or net positive charge. A negative charge is preferred, since a large number of materials are naturally negatively charged at the surface.

The charge may be imparted by the presence of surface groups upon the substrate surface. For example, for inorganic substrates, a substrate surface may be occupied by charged or dissociable moieties.

For example, for polymer substrates, a surface charge may be generated by incorporation of charged groups within the polymer of the substrate. Such charged groups may be anionic or cationic. Examples of anionic groups include carboxylic acid, sulfonic acid, and organic acid groups. Examples of cationic groups include amines, ammonium ions, and organic basic groups.

Examples of charged polymer substrate materials include (co)polymers incorporating monomers as mentioned above.

Preferably the charge is negative, and the substrate comprises anionic groups on its surface.

In some embodiments, the substrate surface may comprise hydroxy groups.

Non-limiting examples of substrates that have such groups on their surface or which form such groups by subsequent treatments such as exposure to the environment, UV, ozone or plasma treatment, include iron, steels, including stainless steel and metals which acquire an oxide coating upon exposure to the ambient environment, for example, aluminum, and aluminum alloys. Additional examples of materials that can acquire an oxide layer upon exposure to the ambient conditions are ceramic materials, for example, silicon nitride. Other materials may have an oxide coating imparted to them, for example, a hard metal oxide such as aluminum oxide applied to a substrate by sputtering.

In a preferred embodiment, the surface to be coated can be treated prior to addition of the crosslinked polymer sublayer. This pretreatment can increase the surface attractiveness to the ionic moieties of the crosslinked polymer sublayer. Such pretreatments may include UV, ozone, and plasma treatments, which can provide surface activation. For example, substrate surfaces can be provided with, or further supplemented with, hydroxy groups by exposing them to UV light in the presence of ozone, for example in a UVO cleaner.

In particular, UV treatment in the presence of ozone can increase the surface area density of hydroxy groups.

Substrates having a surface charge density in the range of negative 0.001 to 0.2 Cm⁻² or a surface potential in the range of negative 20 to 150 mV are useful in the present invention, and achieve good ionic attraction of the sublayer to the substrate.

### POLYMER LAYER APPLICATION

The crosslinked sublayer can be bound to the substrate surface by dip-coating of the substrate in solutions comprising the crosslinked sublayer. For environmental, cost and convenience reasons, the solution is preferably aqueous, that is, it comprises water as the majority component of the dip-coating solution.

The crosslinked sublayer is dissolved or dispersed into the aqueous solution. Where the crosslinked polymer is not readily dispersible or soluble in water, either because of its Mw or chemical make-up (e.g. hydrophobicity) organic solvents may be used instead of, or added to the solution, or surfactants may be used, as is well known in the art.

The crosslinked sublayer adsorbs to the substrate surface attracted by the opposed charges it carries, and so becomes immobilized on the substrate surface by ionic attraction.

The dip-coating solution may be aqueous or non-aqueous as appropriate to the initiating species. Dip-coating in an aqueous medium is generally preferred because a reduced use of volatile organic compounds. For this reason the preferred method of deposition is dip-coating in water and the crossedlinked sublayer polymer is comprised of generally water compatible monomers to maintain reasonable solubility or dispersibility in water.

Application of initiating species from emulsions, dispersions, gels, and similar may also be contemplated.

### POLYMER CHAIN GRAFTING

In accordance with an aspect of the invention, polymer chains, preferably in the form of polymer brushes, are grafted from the sublayer's polymerization initiation sites. Following coating of the substrate surface with the crosslinked sublayer, one or more monomers are provided and a step of polymerization of those monomers is initiated from the polymerization initiating moieties of the crosslinked polymer sublayer.

In the polymerization the monomers build into polymer chains grafted in situ from the initiating moieties of the crosslinked polymer sublayer.

As discussed above, a variety of polymerization reaction mechanisms can be used, including ring opening metathesis polymerization (ROMP); reversible addition fragmentation chain transfer polymerisation (RAFT); Nitroxide-mediated polymerization (NMP); and Atom transfer radical polymerisation (ATRP), including ARGET ATRP. ATRP is the preferred method in the present application since it is compatible with a range of monomer types, is reasonably tolerant of impurities, involves mild reaction conditions and associated catalysts may be reusable. In the case of ATRP the polymerization initiation group in the crosslinked polymer sublayer comprises an alkyl halide as the initiator, preferably the halide is selected to be Br or Cl. The halide forms a leaving group for the ATRP mechanism.

This method generates a dense polymer chain coverage. A dense chain coverage aids in forcing the polymer chains into their extended conformation, i.e. brush conformation.

The length and molecular weight of the polymer chains can be controlled by controlling the quantity of monomer in the polymerization reaction, and the termination point of the reaction.

Polymer chain layer thicknesses may be from up to 25 nm, more preferably from 1 to 20 nm and most preferably from 4-12 nm .

The preferred grafting density of the polymer chains is related to the length of the polymer chains that are grafted from the surface. To achieve preferred stabilities for a polymer brush conformation, the spacing between the chains is less than twice the polymer radius of gyration (rg). In the present invention, the grafting density is preferably at least 1 brush per 10 nm², or 10¹¹ brushes mm⁻². Preferably the grafting density is in the range from 0.05 to 1 chains per nm⁻².

In the polymerization, homopolymers can be generated by providing a single monomer; copolymers can be generated by polymerizing mixtures of monomers; block copolymers can be generated by polymerizing a first monomer or first monomer mix followed by polymerization of a second monomer or monomer mix, followed by repetition to provide further blocks if desired. Gradient copolymers can be achieved by polymerizing a monomer mix and gradually adjusting the monomer mix during polymerization.

### NATURE OF THE MODIFICATION

The nature of the available modifications that may be imparted by polymer chains to a substrate is expansive, whereby the surface can be tailored to give a range of advantageous properties over the native substrate surface.

In line with this, the polymer layer may impart any one or more of a range of differing modified characteristics to the substrate. For example to the wear and wetting properties, and/or general functionality of the substrate. For example the polymer may modify roughness, wetting, surface charge, surface energy, adhesion, reactivity, and friction properties of the substrate. In particular, the coating may be lubricious, hydrophilic, hydrophobic, lypophilic, lypophobic, amphiphilic, nonionic, anionic, cationic, zwitterionic or amphoteric.

The characteristic or functionality that is provided by the polymer layer can be adjusted or fine-tuned, for example, by selection of the monomers making up the polymer chains. For example, the polymer chains may comprise homopolymers, copolymers, block-copolymers, gradient copolymers. For example, poly(ethylene glycol) based polymers typically have good solvency or compatibility with water.

Hydrophilicity of the polymeric chains can be achieved by inclusion of nonionic or ionic hydrophilic groups, or a mixture of nonionic and ionic hydrophilic groups in the polymer chains.

Anionic groups include carboxylic acid groups, sulphonic acid groups or phosphoric acid groups.

Cationic groups include, for example, amine groups, pyridinium groups, sulfonium groups and cationic tertiary amine groups.

Nonionic hydrophilic groups include, for example, polyoxyalkylene (meth-)acrylates, especially 2-(2'-methoxyethoxy)ethyl methacrylate ("MEOzMA"), 2-(2'-methoxyethoxy)ethyl acrylate, 2-(2-(2-methoxyethoxy)ethoxy)ethyl methacrylate ("MEO₃MA").

Hydrophobicity may be incorporated by the use of lipophilic/hydrophobic groups. For example fluorinated monomers may be used, such as pentafluorostyrene, pentafluoropropyl (meth-)acrylate, trifluoroethyl (meth-)acrylate, heptadecafluorodecyl (meth-)acrylate.

In amphiphilic copolymers, both hydrophilic and hydrophobic groups are included. When the polymer chains are amphiphilic, they may be embodied as block polymers comprising a hydrophilic block and a hydrophobic block.

Multi-block polymer chains are preferably di-, tri-, or tetra-block polymers; most preferably di-block polymers. The polymer blocks may be sharply defined blocks of monomers or may be gradient blocks with an overlapping transition zone between monomer blocks.

In general, examples of suitable ethylenically unsaturated monomers for use in the polymerization are (meth-)acrylic monomers. Another example of suitable monomers include styrenic monomers, for example styrene, vinyltoluene and alpha-methylstyrene. Still further examples include acetate monomers.

Specific examples of monomers suitable for the polymer chains include, but are not limited to, styrene, vinyl toluene, alpha-methylstyrene, vinyl acetate, vinyl esters, vinyl chloride, halogen-substituted ethylene or alkylene, methacrylonitrile, acrylonitrile, methyl (meth-)acrylate, ethyl (meth-)acrylate, propyl (meth-)acrylate, isomers of propyl (methacrylate, butyl (meth-)acrylate, isomers of butyl (meth-)acrylate, hexyl (meth-)acrylate, 2-ethylbutyl (meth-)acrylate, crotyl (meth-)acrylate, 2-ethylhexyl (meth-)acrylate, isobornyl (meth-)acrylate, isoamyl (meth-)acrylate, benzyl (meth-)acrylate, phenyl (meth-)acrylate, tetrahydrofurfuryl (meth-)acrylate, 3,3,5-trimethylcyclohexyl (meth-)acrylate, alpha-methylstyrene, cyclohexyl (meth-)acrylate, stearyl (meth-)acrylate, lauryl (meth-)acrylate, isodecyl (meth-)acrylate, glycidyl (meth-)acrylate, 2-hydroxyethyl(meth-)acrylate, hydroxypropyl (meth-)acrylate, isomers of hydroxypropyl (meth-)acrylate, 4-hydroxybutyl (meth-)acrylate, isomers of hydroxybutyl(meth-)acrylate, glycerolmono(meth-)acrylate, (meth-)acrylic acid, dimethylaminoethyl (meth-)acrylate , diethylaminoethyl (meth-)acrylate, dimethylaminopropyl methacrylamide, 2-tert-butyl aminoethyl(meth-)acrylate, triethyleneglycol (meth-)acrylate, methacrylamide, N,N-dimethyl methacrylamide, N-tert-butyl methacrylamide, N-methylol methacrylamide, N-ethylol methacrylamide, alpha-methylvinyl benzoic acid (all isomers), diethylamino alpha-methylstyrene, 2-isocyanatoethyl (meth-)acrylate, isomers of diethylamino alpha-methylstyrene, trimethoxysilylpropyl (methacrylate, triethoxysilylpropyl (meth-)acrylate, (meth-)acrylic acid, tributoxysilyl propyl (meth-)acrylate, dimethoxymethylsilyl propyl (meth-)acrylate, diisopropoxymethylsilylpropyl (meth-)acrylate, dimethoxysilylpropyl (meth-)acrylate, diethoxysilylpropyl (meth-)acrylate, dibutoxysilylpropyl (meth-)acrylate, diisopropoxysilyol propyl (meth-)acrylate, isobutylene, methoxy polyethyleneglycol (meth-)acrylates, polyethylene glycol) (meth-)acrylates, di(ethylene glycol) (meth-)acrylate, tri(ethylene glycol) (meth-)acrylate, 2- methoxyethyl (meth-)acrylate, 2-(2'-methoxyethoxy)ethyl acrylate, 2-(2'-methoxyethoxy)ethyl methacrylate ("MEOzMA"), 2-(2'-methoxyethoxy)ethyl acrylate, 2-(2'-methoxyethoxy)ethyl methacrylate ("MEO₃MA"), DMAEMA (2-(dimethylamino)ethyl methacrylate), OEGMA₃₀₀, MPC (2-(methacryloyloxy)ethyl phosphorylcholine) and SBMA (2-(methacryloyloxy)ethyl)dimethyl-(3-sulfopropyl)-ammonium hydroxide), and mixtures thereof.

### FRICTION MEDIATION

A particular example of surface modification can include friction mediation. As discussed above in relation to the consumer articles and packaging for consumer goods, it may be desirable to mediate the friction of an article to optimize the skin to article interface.

Examples of useful monomers for friction reduction are fluorinated monomers. These produce polymers with hydrocarbon back bones and fluorinated side groups, which may offer low coefficients of friction.

Particular examples of friction reducing monomers include fluorinated polymers, such as pentafluorostyrene (PFS), pentafluoropropyl acrylate (PFA), trifluoroethyl acrylate (TFA), heptadecafluorodecyl acrylate (HFA), pentafluoropropyl methacrylate (PFA), trifluoroethyl methacrylate (TFA), heptadecafluorodecyl methacrylate (HFA), and mixtures thereof. The friction reducing monomers may be used in combination with other monomers, including those other monomers listed in this document.

In a preferred example, the polymer chains comprise a copolymer comprising a hydrophobic block adjacent to the substrate surface, and a hydrophilic block outer to the hydrophobic block. That is, in a preferred example, the copolymer comprises a proximal hydrophobic block and a distal hydrophilic block.

In such an example, the presence of a hydrophobic block adjacent the substrate may act as water barrier when the substrate is used in an in aqueous environment, urging water away from the surface and reducing possible corrosion.

The hydrophilic polymer block may act for aqueous lubrication along a user's skin. This may be of particular use for wet shave articles, especially razor cartridges, which, as discussed earlier may benefit from a lower coefficients on some components to give better skin-glide and or reduced cutting force.

In an example the proximal hydrophobic block comprises monomers fluorinated polymers.

In an example the distal hydrophilic block comprises monomers having alkoxy groups.

In a preferred example, the polymer chains comprise a proximal hydrophobic block comprising fluorinated (meth)acrylate monomers, and a distal hydrophilic block comprising alkoxy (meth)acrylate monomers.

Preferred diblock copolymer chain structures include block copolymers of PFA with MEO₂MA and HFA with MEO₂MA.

### FRICTION ENHANCEMENT

As discussed above some articles associated with the present invention, may benefit from an increased coefficient of friction. For example, the guard of a razor, or a handle or gripping portion of a razor or package for consumer goods.

Preferably, the polymer chains are adapted to give a high coefficient of friction when wetted, e.g., a higher coefficient of friction when wet compared to the known thermoplastic elastomers. To achieve this, the polymer chains may be composed to be hydrophilic, and preferably polar. Additionally or alternatively, the polymer chains are composed to give a high surface energy. These adaptations may beneficially increase wettability of the surface so that water beads are minimized or non-existent when the wet friction material is wet with water. Without intending to be bound by any theory, it is believed that preventing water (or other lubricious materials) from beading and improving wettability (e.g., promoting surfacing wetting) may each or both serve to thin the amount of water that a user must penetrate to engage the skin to the wet friction material.

The polymer chains may be made hydrophilic, preferably polar, by inclusion of monomers comprising hydrophilic, preferably polar groups. Suitable groups include anionic groups such as carboxylic acid groups, sulphonic acid groups or phosphoric acid groups and/or cationic groups such as amine groups, pyridinium groups, sulfonium groups and cationic tertiary amine groups.

### ANTI-FOULING PROPERTIES

A further example of surface modification can include the provision of anti-fouling properties that can combat microbe habituation of the modified surfaces.

Anti-fouling may be achieved by provision of protein anti-adhesive polymer chains that aid in preventing adhesion of microbes and/or detritus (that might form nourishment for microbes) to a surface. Alternatively, anti-bacterial chains may be provided that are imparted with microbe damaging or destructive properties.

In terms of anti-adhesive polymer chains, hydrophilic chains may generally resist adherence of biomolecules as there can be a tendency for these to bind more preferably with hydrophobic surfaces. Exemplary polymers having good anti-adhesion toward proteins when formed into chains include poly(methyl methacrylate) (PMMA) and poly(ethylene glycol) (PEG).

In terms of anti-bacterial properties, exemplary polymer chains offering anti-bacterial properties include tBAEMA, and PDMAEMA.

In a further embodiment, the polymer chains may comprise copolymers with both anti-adhesion and anti-bacterial monomers, to give the benefits of both resistance to protein adherence and anti-bacterial activity.

### ANTI-CORROSION PROPERTIES

A further example of surface modification can include the provision of Anti-corrosion properties. For example, the use of hydrophobic polymer chains applied to metals may aid in reducing oxidative corrosion by urging water away from the surface. For example, inclusion of non-polar monomers within the polymer chains can aid in obstructing contact with polar liquids that may contribute to corrosion of the surface.

### STIMULI RESPONSIVE PROPERTIES

A further example of surface modification can include the provision of stimuli responsive surfaces. For example, polymer brushes may be constructed to offer stimuli alterable characteristics. Exemplary stimuli may include temperature, pH, electric potential and/or immersion in a polar or non-polar solvent system. Such stimuli responsive changes are typically reversible.

An example of stimuli response includes thermoresponsive brushes. These are polymer brushes that have temperature dependent conformations in the range of use. For example, a shaving article my typically be stored at room temperature (25°C) or below, while the shaving article may be raised to temperatures above room temperature during shaving use. A thermoresponsive polymer brush may shift from a cold conformation to a hot conformation to give different characteristics in the different temperature ranges. For example a polymer brush may transition to a hot conformation at temperatures above 25°C, preferably at temperatures at or above 30°C, more preferably at temperatures at or above 35°C.

Examples of thermoresonsive polymers that can be included in the polymer brushes include Poly(N-isopropylacrylamide) (PNIPAM). PNIPAM is a temperature responsive polymer. Below 32°C it is in an extended conformation taking on a brush form, which presents a hydrophilic surface. At temperatures above 32°C it collapses to a globular form (its lower critical solution temperature (LCST)), and presents a more hydrophobic surface. This is believed to be due to the chains preferring hydrogen bonding with external water molecules below this temperature, with a preference for the side groups to form intramolecular hydrogen bonds above it.

Another example of stimuli responsive polymer brushes includes multi-block stimuli responsive polymer brushes. Multi-block co-polymers comprise two or more layers of polymer brush chains, with each individual chain of each layer being tethered at one end to the previous layer. By use of monomer blocks having dissimilar properties, the polymer brushes can be manipulated to behave differently under varying conditions. For example, monomer blocks can be solvent responsive.

An example of a diblock copolymer involves the use of a semi fluorinated monomer distal block and a hydrocarbon monomer proximal block. Application of various fluorinated and organic solvents can then be used to induce rearrangement between ultrahydrophobic when the fluoropolymers are extended to much less hydrophobic when collapsed.

### POLYMER CHAIN CHARACTERIZATION

In addition to the monomer makeup of the polymer chains, the characteristics of the polymer chains may be influenced by the surface area density of the polymer chains on the surface (grafting density), which is related to the inter-chain spacing. Furthermore, the chain length and molecular weight of the polymer chains may be a relevant factor.

Chain length, which contributes to supra-layer thickness, can be controlled by the initial amount of monomer when the reaction is allowed to go to completion. Alternatively a large excess of monomer can be added and the reaction time controlled by active reaction termination.

Useful properties are achieved, for example, when the chain length (also named height), L, and the inter-chain spacing, s, (distance between adjacent brushes) grafted on a surface, are in optimized ranges.

The chain length is preferably at least 5 nm, more preferably at least 10 nm, and most preferably at least 20 nm. A minimum chain length can help to ensure that sufficient polymer functionality is provided, for example that a good amount of functional monomer is included with the polymer chains to achieve the above-mentioned functionalities or characteristics, e.g. hydrophilic, hydrophobic etc.

The chain length is preferably at most 200 nm, more preferably at most 150 nm, more still more preferably 100 nm, and most preferably at most 50 nm. A maximum chain length may be associated with efficient application of polymer chains, especially brushes.

The thickness of the polymer layer is preferably from 5 to 200 nm, more preferably from 20 to 100 nm. The layer thickness can be determined using Scanning Electron Microscopy (SEM) or Transmission electron microscopy (TEM) to examine the cross-section of a coated substrate as compared to an uncoated substrate.

The inter-chain spacing is preferably relatively low, such that polymer chains are crowded and force one another into extended conformations of the a polymer brush.

The average inter-chain spacing is preferably at least 1 nm, more preferably at least 2 nm, more preferably at least 3 nm. The average inter-brush spacing is preferably at most 7 nm, more preferably at most 6 nm, more preferably at most 5 nm. The average inter-brush spacing is more preferably from 1 to 7 nm, more preferably from 2 to 6 nm and more preferably from 3 to 5 nm. The inter-brush spacing can be determined from the average density of initiation moieties at the surface (e.g. halides), and can be measured using X-ray photoelectron spectroscopy.

The inter-brush spacing may also be described in the inverse by the grafting density, i.e. the number of polymer brushes nm⁻². A lower inter-brush spacing gives a higher grafting density. The grafting density is preferably at least 1 brush per 10 nm², preferably at least 1 brush per 4 nm²; or 10¹¹ brushes mm⁻². More preferably the grafting density is in the range from 0.05 to 2 chains per nm⁻², more preferably in the range of 0.05 to 1 chains per nm⁻².

The inter-chain spacing can be determined as the average density of initiation moieties at the surface (e.g. halides), and can be measured using X-ray photoelectron spectroscopy.

### COMBINATION WITH SHAVING AID

In a further aspect of the invention, the shaving article may be adapted for combination with a personal care composition.

In this aspect the polymer chains may be provided with charged monomers having charged side groups, preferably being polyelectrolyte chains. When provided in combination with a personal care composition comprising counter ions, a particularly good friction mediation may be achieved. This is believed to be due to the counter ions supporting some of the load when the surfaces are pushed together and also hindering interdigitation due to the ionic repulsions.

In line with this, an aspect of the present invention there may be provided a kit of parts comprising:
- a shaving cartridge in accordance with the invention, wherein the polymer chains comprise charged groups; and
- a dermatologically acceptable (topically applicable) shaving composition comprising counter ions to the charged groups of the polymer chains.

This aspect of the invention may also comprise a method of shaving comprising:
i) providing a shaving article in accordance with the invention, wherein said polymer chains comprise charged groups; and
ii) applying a dermatologically acceptable (topically applicable) shaving composition comprising counter ions to the charged groups of the polymer chains to an area of skin; and
iii) shaving said skin area with the shaving cartridge.

The charged side groups may comprise anionic groups such as carboxylic acid groups, sulphonic acid groups or phosphoric acid groups and/or cationic groups such as amine groups, pyridinium groups, sulfonium groups and cationic tertiary amine groups.

The dermatologically acceptable shaving composition is any of a shaving solution, emulsion (water in oil or oil in water emulsion etc.), gel, foam, or similar. The shaving composition may comprise detersive surfactants, water, pH modifier, humectants, personal care benefit agents, propellant, and commonly used ingredients.

In one embodiment the polymer chains are zwitterionic, comprising zwitterionic side groups. In such an embodiment friction mediation can be achieved with just water because counterions may not be needed, as may be the case with anionic or cationic brush poymers, in order to aid the friction mediation. The water layer between the chains and the skin and/or hair aids lubrication.

### BRIEF DESCRIPTION OF THE DRAWINGS

Features and advantages of the invention will be appreciated upon reference to the following drawings, in which:
FIG. 1 is a view of a consumer article package.
FIG. 2 is a front view of a wet razor having a cartridge unit and a handle.
FIG. 2a is a rear view of the wet razor of figure 2.
FIG. 3 is a view of a blow molded consumer goods package.
FIG. 4 is a view of a consumer goods package comprising a closure.

### DESCRIPTION OF ILLUSTRATIVE EMBODIMENTS

The following is a description of aspects and features of the invention, given by way of example only and with reference to the drawings.

### EXAMPLES

The following examples demonstrate, by way of illustration only, application of a polymer layer to a charged substrate, in accordance with the invention.

Firstly there is described the synthesis of a crosslinked polymer sublayer carrying charges moieties and polymerization initiation groups, in the form or cationic groups. Secondly there is described a dip-coating technique for a substrate with the crosslinked polymer sublayer, in the case of the example the substrate is silicon. Thirdly, grafting of polymer brushes from the coated substrate is carried out, in the example by ATRP polymerization.

### Materials:

The following materials were used. Poly(ethylene glycol) methacrylate (PEGMA360, Average Mn 360), 2-chloro-propionyl chloride (97 %), 1-dodecanethiol (DDT, ≥98 %), ethylene glycol dimethacrylate (EGDMA, 98 %), 2,2'-azobis(2-methylpropionitrile) (AIBN, 98 %), diethyl ether (≥99.8 %) and tetrahydrofuran (THF, 99.9 %), triethylamine (TEA, ≥99 %), sodium hydrogen carbonate (>95 %), magnesium sulphate (>95 %), ethanol (≥99.5 %), pressurised argon and nitrogen, ultrapure water (resistivity: 18.2 MΩ cm, total organic content (TOC): 3-4 ppb), P-type, boron-doped, single side polished, 10 cm diameter and 500 µm thick test-grade silicon wafers.

PEG-Cl was synthesized as follows. PEGMA360 (10.0 mL, 11.1 g, 30.8 mmol), 2-chloropropionyl chloride (3.0 mL, 3.9 g, 31.4 mmol) and tetrahydrofuran (40 mL) were placed into a round bottom flask cooled in an ice bath. TEA (4.2 mL, 3.1 g, 30.7 mmol) was added dropwise to the reaction mixture over a period of a half an hour and left to stir overnight. Diethyl ether (40 mL) was added subsequently before filtering the mixture *in vacuo.* The liquid filtrate was then washed three times with 2 % sodium hydrogen carbonate solution, using a separating funnel. The resulting cloudy yellow liquid was then dried over anyhdrous magnesium sulphate and filtered *in vacuo.* The solution was then dried *in vacuo,* giving a yellow oil as a product (PEG-Cl, 8.7 g, 19.3 mmol, 62.5 %).

PEG-N⁺ was synthesized as follows. PEGMA360 (10.0 mL, 11.0 g, 30.6 mmol), 2-chloropropionyl chloride (3.0 mL, 3.8 g, 29.9 mmol) and tetrahydrofuran (40 mL) were placed into a round bottom flask cooled in an ice bath. TEA (4.2 mL, 3.1 g, 30.7 mmol) was added dropwise to the reaction mixture over a period of a half an hour and left to stir overnight. Diethyl ether (40 mL) was added subsequently before filtering the mixture *in vacuo.* The liquid filtrate was then washed with 2 % sodium hydrogen carbonate solution, three times, each time separating with a separating funnel. The resulting cloudy yellow liquid was then dried over anyhdrous magnesium sulphate and filtered *in vacuo.* The solution was then dried *in vacuo,* giving a yellow oil as a product (PEG-Cl, 8.0 g, 17.7 mmol, 58.0 %).

A portion of that product (5.0 mL, 5.7 g, 12.7 mmol) was mixed with water (20 mL) in a round bottom flask in an ice bath. To this triethylamine (3.0 mL, 2.2 g, 22.0 mmol) was added dropwise over a period of 20 minutes. This was left to for 24 hours, after which the solution was dried *in vacuo* for 48 hours, leaving behind a yellow liquid product (PEG-N+, 5.9 g, 10.6 mmol, 83.7 %).

### Synthesis of crosslinked sublayer polymers:

Three variants of the crosslinked sublayer polymer were prepared with weight ratios of 25/75 (A), 50/50 (B) and 75/25 (C) of PEG-Cl/PEG-N⁺, 5 parts of the cross-linker (EGDMA) and 5 parts of the chain transfer agent (DDT), according to the following reaction:

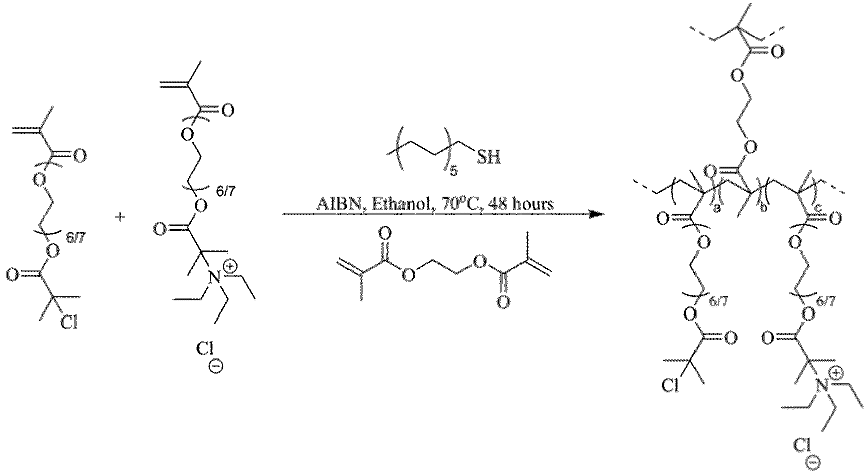

Three round bottom flasks were prepared in a Radley 6-reaction carousel, each equipped with a stirrer bar and heated to 70 °C.

Into flask 1 was placed ethanol (39 mL), DDT (60 µL, 50 mg, 0.3 mmol), EGDMA (50 µL, 53 mg, 0.3 mmol; as crosslinker), PEG-N+ (1800 µL, 2068 mg, 3.8 mmol; as charge carrying monomer), PEG-Cl (494 µL, 563 mg, 1.3 mmol; as polymer brush polymerization initiator carrying monomer) and AIBN (20 mg, 0.1 mmol) pre-dissolved in ethanol (1 mL).

Into flask 2 was placed ethanol (37 mL), DDT (60 µL, 50 mg, 0.3 mmol), EGDMA (50 µL, 53 mg, 0.3 mmol), PEG-N+ (1200 µL, 1380 mg, 2.5 mmol), PEG-Cl (988 µL, 1126 mg, 2.5 mmol) and AIBN (20 mg, 0.1 mmol) pre- dissolved in ethanol (1 mL).

Into flask 3 was placed ethanol (39 mL), DDT (60 µL, 50 mg, 0.3 mmol), EGDMA (50 µL, 53 mg, 0.3 mmol), PEG-N+ (600 µL, 690 mg, 1.3 mmol), PEG-Cl (1422 µL, 1621 mg, 3.6 mmol) and AIBN (20 mg, 0.1 mmol) pre- dissolved in ethanol (1 mL).

The reaction proceeded at 70 _{°}C for 48 hours after which the products were separately precipitated in diethyl ether (15 mL), rinsed using ethanol and dried in vacuo. This produced three products, each of which were viscous yellow liquids.

### Substrate coating with crosslinked sublayer:

1 × 1 cm substrates of silicon were cut from larger silicon wafers using a diamond cutter and placed into a 50:50 acetone:ethanol bath and sonicated for 15 minutes. After sonication the silicon substrates were dried under a stream of nitrogen before being UV-Ozone treated (Jelight 42-200) for a further 15 minutes to remove hydrocarbon contamination and increase the total concentration of hydroxyl groups present on the surface.

Concomitantly 0.02 wt% solutions of each of the three crosslinked sublayer polymers A to C were prepared to which the silicon substrates were then added to incubate at room temperature for about 2 hours. Following incubation, the substrates were rinsed using water to remove excess crosslinked sublayer polymer solution, and dried under a stream of nitrogen.

Polymer layer thicknesses of 2 to 5 nm were observed. Polymers A and B were more readily soluble in water and yielded a more uniform coating on the surface than polymer C. Furthermore, the coating of polymer A remained more uniform than the coating of polymer B when subjected to soaking in water.

### Grafting polymer brushes from crosslinked sublayer

Demonstrating the versatility of the crosslinked sublayer with charges and initiation groups, a range of polymers were grafted from model anionic substrates illustrating results for both strongly and weakly charged anionic substrates, i.e. mica and silicon respectively.

Polymer brush grafting was done with P(DMAEMA), P(MEOzMA), P(OEGMA300) and P(SBMA) polymers on the two anionic surfaces.

DMAEMA refers to 2-(dimethylamino)ethyl methacrylate.

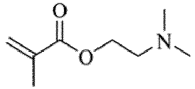

MEO₂MA refers to the general structure for poly(ethylene glycol) methyl ether methacrylate: 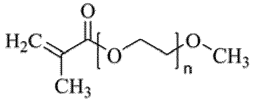 when n is equal to 2.

OEGMA₃₀₀ refers to the same structure when a mixture of two monomers, where n is equal to either 4 or 5, are combined to produce an average molecular weight of 300.

P(SBMA) refers to 2-(methacryloyloxy)ethyl]dimethyl-(3-sulfopropyl)-ammonium hydroxide.

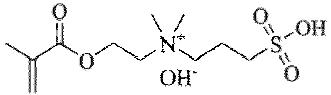

### Materials:

2,2'-Bipyridyl (BiPy, >99 %), Cu(I)Cl (≥99.995 %), Cu(II)Cl2 (≥99.999 %), (+)-sodium L-ascorbate (NaAsc, ≥98 %), di(ethylene glycol) methyl ether methacrylate (MEO2MA, 95 %), poly(ethylene glycol) methyl ether methacry- late (OEGMA300, Average *Mn* 300), 2-(dimethylamino)ethyl methacrylate (DMAEMA, 98 %) and 2-(methacryloyloxy)ethyl]dimethyl-(3-sulfopropyl)- ammonium hydroxide (SBMA, 97 %), pressurised argon and nitrogen, ultrapure water (resistivity: 18.2 MΩ cm, total organic content: 3-4 ppb), P-type, boron-doped, single side polished, 10 cm diameter and 500 µm thick, <100> test-grade silicon wafers, natural muscovite mica, composition KAl₂(Si₃Al)O₁₀(OH)₂, Al special grade.

### Coating of substrates:

1 × 1 cm substrates of silicon were cut from larger silicon wafers using a diamond cutter and placed into a 50:50 acetone:ethanol bath and sonicated for 15 minutes. After sonication the silicon substrates were dried under nitrogen before being UV-Ozone treated (Jelight 42-200) for a further 15 minutes to remove hydrocarbon contamination and to increase the total concentration of hydroxyl groups present on the surface. Pieces of mica were cleaved on both sides to a thickness of around 50 µm before being cut into 3 × 1 cm pieces using scissors, no further cleaning was undertaken.

Concomitantly a 0.02 wt% solution of the crosslinked sublayer polymer was prepared, into which mica and/or silicon substrates were placed and left for 2 hours to incubate at room temperature. Following incubation the substrates were rinsed with water followed by soaking in an aqueous environment for 30 minutes before a final rinsing under water and then drying under nitrogen to ensure removal of any excess polymer.

Atomic-force microscopy (AFM) and X-ray reflectometry (XRR) results showed that the crosslinked sublayer, polymer mat adsorbed as a thin layer, in the region of 1 nm thick, with X-ray photoelectron spectroscopy (XPS) indicating a high density of chlorine groups on the surface, in the region of 3.1 sites per square nanometer.

ATRP polymerization on coated silicon:
Silicon substrates coated in accordance with the above was subjected to ATRP polymerization to graft polymer brushes therefrom. For each reaction a total volume of 3 mL was used, to ensure coverage of the substrate, with a ratio between monomer, BiPy, Cu(I)Cl and Cu(II)Cl₂ of 80:2.2:0.9:0.1. Of each 3 mL preparation, 1.5 mL constituted the monomer and the remaining 1.5 mL contained the ATRP reaction chemicals. MEOzMA, OEGMA300 and DMAEMA were liquids and thus were used neat. For SBMA a 50 vol/wt% solution was prepared.

The substrates were placed in flat bottomed containers which were sealed and purged with nitrogen. 3 mL aliquots of reaction mixtures of the monomers, BiPy, Cu(I)Cl and Cu(II)Cl₂ as set forth in table 1 were injected into each of the purged containers and left to react for two hours (additionally 24 hours for MEOzMA), after which the reaction was quenched with oxygenated water before removing the substrates and rinsing them under water. The substrates were then placed in an aqueous environment for 30 minutes before a further rinsing and finally being dried under nitrogen.

**Table 1**

| | MEO₂MA | OEGMA₃₀₀ | DMAEMA | SBMA |
|---|---|---|---|---|
| Monomer (mmol) | 8.13 | 5.25 | 8.91 | 2064 |
| Monomer (mg) | 1530 | 1580 | 1400 | 750 |
| BiPy (mmol) | 0.224 | 0.144 | 0.245 | 0.0738 |
| BiPy (mg) | 34.9 | 25.6 | 38.3 | 11.5 |
| Cu^{(I)}Cl (mmol) | 0.0914 | 0.0591 | 0.100 | 0.0302 |
| Cu^{(I)}Cl (mg) | 9.05 | 5.85 | 9.92 | 2.99 |
| Cu^{(II)}Cl₂ (mmol) | 0.0102 | 0.00656 | 0.0111 | 0.00336 |
| Cu^{(II)}Cl₂ (mg) | 1.36 | 0.882 | 1.50 | 0.451 |

ARGET ATRP on silicon and mica:
Silicon and mica substrates coated in accordance with the above were subjected to ATRP polymerization to graft polymer brushes therefrom. For each reaction a total volume of 10 mL was used, with a ratio between monomer, BiPy, NaAsc and Cu(II)Cl₂ of 1000:10:10:1. Of each 10 mL preparation, 5 mL constituted monomer and the remaining 5 mL contained the ATRP reaction chemicals. For each surface to be coated the quantities set forth in table 2 were used.

**Table 2**

| | DMAEMA | SBMA |
|---|---|---|
| Monomer (mmol) | 29.7 | 8.95 |
| Monomer (mg) | 4670 | 2500 |
| BiPy (mmol) | 0.297 | 0.0895 |
| BiPy (mg) | 46.3 | 14.0 |
| NaAsc (mmol) | 0.297 | 0.0895 |
| NaAsc (mg) | 58.8 | 17.7 |
| Cu^{(II)}Cl₂ (mmol) | 0.0297 | 0.00895 |
| Cu^{(II)}Cl₂ (mg) | 3.99 | 1.20 |

The initiated mica or silicon substrates were placed in flat bottomed containers. 10 mL aliquots of the ATRP reaction mixture of monomer, BiPy, NaAsc and Cu(II)Cl₂ were injected into each of the containers and left to react, after which the reaction was quenched with oxygenated water before removing the substrates and rinsing them under water. The substrates were then placed in an aqueous environment for 30 minutes before a further rinsing and finally being dried under nitrogen.

### EXAMPLES OF ARTICLES

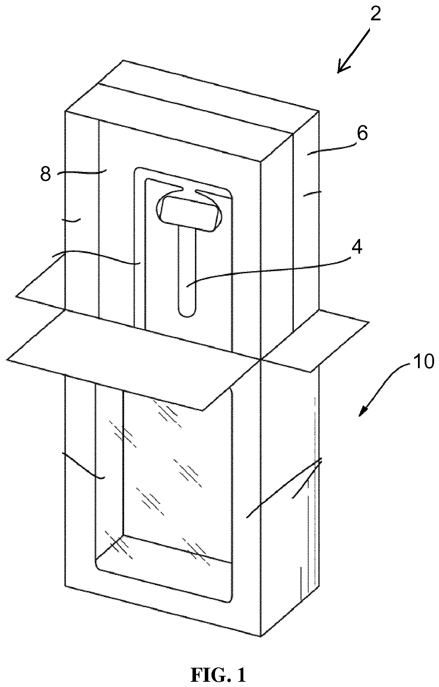

Referring now to FIG. 1 there is shown an article 2 in the form of packaging for a consumer article 4. The first and second frames 6 and 8, may be made of plastic providing the necessary structural integrity to support and display a consumer article, in this case a wet shave razor 4. However, other objects such as toothbrushes, lipstick, brushes, and other solid objects may be provided.

An outer container 10 is also provided. The outer container 10 holds frames 6 and 8. The outer container 10 may be made of plastic providing the necessary structural integrity to support and display the object 4. When the first and second frames 6 and 8 respectively, are inserted into outer container 100, the alignment of openings allow for viewing of the object 4.

In accordance with the present invention, any one or more of the surfaces of the packaging may be fully or partially coated with a polymer layer as discussed. Desirably the polymer brushes of the added polymer layer are composed to impart an increased coefficient of friction, especially under wet conditions.

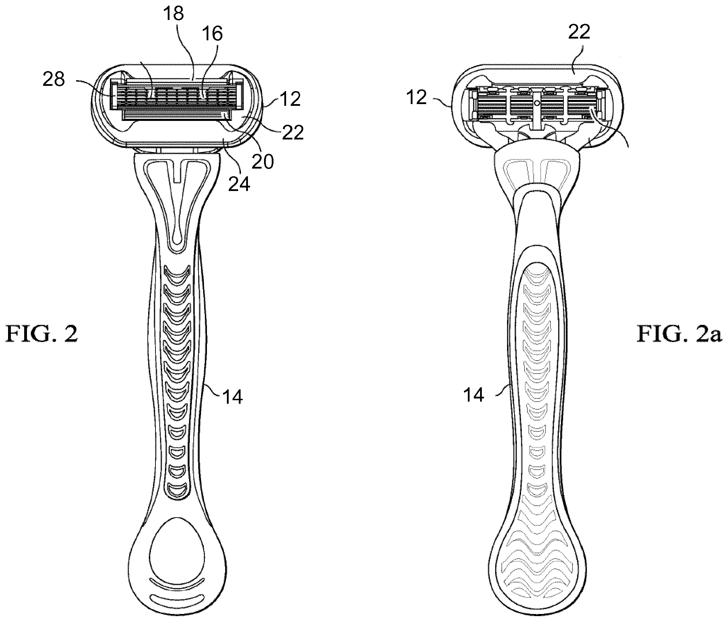

Referring to fig. 2, a consumer article in the form of a wet shave razor 4 generally includes a shaving or cartridge unit 12 attached to a handle 14 with the shaving unit 12 having one or more blades 16 (e.g. 5 blades shown) each with a sharpened edge and comprising stainless steel. The blades 16 are at least partially retained by blade clips 28. A cap 18 and guard 20 may also be included in the shaving unit 12, the cap 18 preferably including a lubricating strip or shaving aid composite affixed thereon. The shaving unit 12 also includes a frame or housing 22, preferably made of hard plastic. In this particular shaving unit 12, there is also present a lubricating ring 24 disposed around the periphery of the shaving unit. The cartridge unit 12 may be adapted for coupling and uncoupling from the razor handle 14 such that a new cartridge unit 12 may be coupled to the handle when the blades become dull or may be integral with a handle 14 so that the complete razor 4 is discarded when the blades become dull.

FIG. 2a depicts the opposite or rear side of the razor 4 showing the back side of the frame 22 and the cartridge unit 12.

In accordance with the present invention, any one or more of the surfaces of the wet shave razor 20 may be fully or partially coated with a polymer layer as discussed.

Preferably, for a modifying polymer layer added to portions of the handle 24, or the guard 25, the polymer brushes of the added polymer layer are composed to impart an increased coefficient of friction, especially under wet conditions.

Preferably, for a modifying polymer layer added to a razor blade or cartridge unit components to the rear or adjacent the blades (e.g. blade clips, frame, housing, cap, etc.) the polymer brushes of the added polymer layer are composed to impart an reduced coefficient of friction, especially under wet conditions.

While a specific embodiment of a razor is depicted in FIGs. 2 and 2a, any razor construction type is contemplated in the present invention.

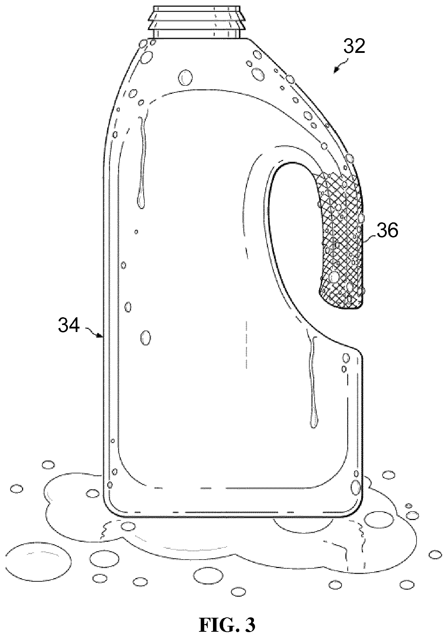

Referring to FIG. 3, an article in the form of a blow molded consumer goods package 32 comprises a body 34 and a handle 36. The blow molded article 32 may additionally include a substrate, such as a film substrate, for decorative purposes, e.g., for labels, instructions, information, etc. A portion of the blow molded article, such as the body 34, the handle 36, and/or the substrate, may have low surface energy and/or hydrophobic properties such that water on the portion beads up when the blow molded article 32 is wet with water.

In accordance with the invention, a polymer layer is disposed on the handle 36 of the blow molded article 32. In order to counter beading of water on the handle, the polymer layer are composed to impart hydrophilic, polar, properties. This is believed to improve gripping in aqueous environments by minimizing water beads when the handle 36 is wet with water. Without intending to be bound by any theory, it is believed that preventing water (or other lubricious materials) from beading and improving wettability (e.g., promoting surfacing wetting) may each or both serve to thin the amount of water that a user must penetrate to engage the skin to the article's external surface.

The polymer layer can be included on or with any skin- engaging portion of the blow molded article 32 in addition to, or alternatively to the handle 36.

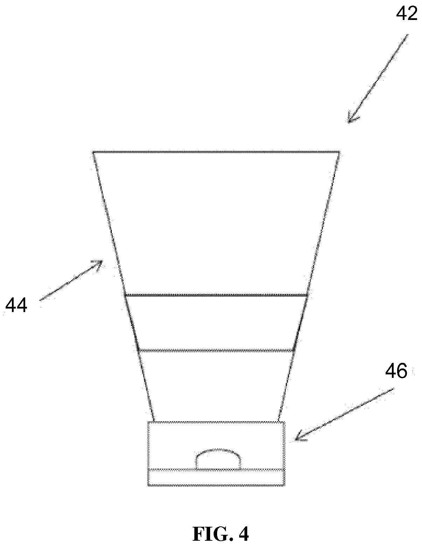

Referring to FIG. 4, a product container 42 comprises a body 44 defining a hollow interior and a closure 46. The closure 46 is coupled to the body 44 such that the closure covers, either directly or indirectly, the hollow interior. For example, the closure 46 can be coupled to the body 44 via a screw-type arrangement, snap-fit connection, friction-fit connection, lock-and-key connection, male-female engagement, etc.

In accordance with the invention a polymer layer is disposed on the closure 46. Similarly to the example of FIG. 3, the polymer layer is composed to impart hydrophilic, polar, properties. This is believed to improve gripping in aqueous environments by minimizing water beads when the closure 46 is wet with water

The polymer layer can be included on any skin-engaging portion of the closure 30.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. An article, wherein said article is a shaving article or a hair removal device, comprising,
a substrate having a charged surface; and
a polymer layer on said substrate surface; wherein
said polymer layer comprises,
a crosslinked sublayer comprising charged moieties having a charge opposite to that of said charged surface; and
a supra-layer comprising polymer chains grafted from the sublayer and extending away from said substrate surface, preferably wherein the polymer chains are polymer brushes.

2. The article of claim 1, wherein the crosslinked sublayer comprises:
from 5 to 94.5 wt% of monomers carrying at least one charged moiety or precursor thereof, preferably a cationic moiety or precursor thereof, more preferably a quaternary ammonium moiety or precursor thereof;
from 5 to 90 wt% of monomers carrying at least one polymerization initiation moiety or at least one polymer chain grafted therefrom; and
from 0.5 to 5 wt% of a cross-linker.

3. The article of any preceding claim, wherein a molar ratio of charged moiety carrying monomers to the sum of monomers carrying at least one polymerization initiation moiety and the monomers carrying at least one polymer chain grafted therefrom, in the crosslinked sublayer, is from 1:4 to 4:1, preferably about 3:1,

4. The article of any preceding claim, wherein the cross-linker comprises a bifunctional cross-linker.

5. The article of any preceding claim, wherein the crosslinked sublayer has a Mw in the range from 5000 to 400,000 Da, more preferably from 10,000 to 200,000 Da.

6. The article of any preceding claim, wherein the substrate surface is negatively charged, and the crosslinked sublayer comprises cationic moieties.

7. The article of any preceding claim, wherein the crosslinked sublayer comprises quaternary ammonium moieties.

8. The article of any preceding claim, wherein the polymer chains comprise fluorinated monomers, alkoxylated monomers, and/or mixtures thereof.

9. The article of any preceding claim, wherein the article is a wet shave razor or a component thereof.

10. A method of making an article, said article being a shaving article or a hair removal device, comprising a substrate with an external polymer coating comprising polymer chains, the method comprising the steps of:
a. providing a substrate comprising a charged surface;
b. providing a crosslinked polymer comprising charged moieties having a charge opposite to that of said charged surface, and polymerization initiation moieties;
c. applying said crosslinked polymer to said substrate surface;
d. providing monomers reactive for polymerization with the polymerization initiation moieties; and
e. polymerizing the monomers with the polymerization initiation moieties;
wherein said crosslinked polymer's charged moieties form ionic attraction, attachment points to the charged substrate surface.

11. The method of claim 10, wherein the substrate in step a. comprises a negative surface charge and the charged moieties of the crosslinked polymer comprise quaternary ammonium moieties.

12. The method of any of claims 10 to 11, wherein step c. involves dip-coating the substrate surface in a solution, emulsion or dispersion comprising the crosslinked polymer.

13. The method of any of claims 10 to 12, wherein polymerization step e. involves atom transfer radical polymerization.

14. The method of any of claims 10 to 13, wherein the monomers comprise fluorinated polymers, preferably pentafluorostyrene, pentafluoropropyl (meth-)acrylate, trifluoroethyl (meth-)acrylate, heptadecafluorodecyl (meth-)acrylate and/or mixtures thereof.

## Patentansprüche

1. Artikel, wobei der Artikel ein Rasierartikel oder eine Haarentfernungsvorrichtung ist, umfassend,
ein Substrat, das eine geladene Oberfläche aufweist; und
eine Polymerschicht auf der Substratoberfläche; wobei die Polymerschicht umfasst,
eine vernetzte Teilschicht, umfassend geladene Einheiten, die eine Ladung aufweisen, die der der geladenen Oberfläche entgegengesetzt ist; und
eine Supraschicht, umfassend Polymerketten, die aus der Teilschicht gepfropft sind und sich von der Substratoberfläche weg erstrecken, vorzugsweise wobei die Polymerketten Polymerbürsten sind.

2. Artikel nach Anspruch 1, wobei die vernetzte Teilschicht umfasst:
von 5 bis 94,5 Gew.-% Monomere, die mindestens eine geladene Einheit oder einen Vorläufer davon tragen, vorzugsweise eine kationische Einheit oder einen Vorläufer davon, mehr bevorzugt eine quartäre Ammoniumeinheit oder einen Vorläufer davon;
von 5 bis 90 Gew.-% Monomere, die mindestens eine Polymerisationsinitiierungseinheit oder mindestens eine davon gepfropfte Polymerkette tragen; und
von 0,5 bis 5 Gew.-% einen Vernetzer.

3. Artikel nach einem der vorstehenden Ansprüche, wobei ein Molverhältnis von geladener Einheit, die Monomere trägt, zu der Summe von Monomeren, die mindestens eine Polymerisationsinitiierungseinheit tragen, und den Monomeren, die mindestens eine davon gepfropfte Polymerkette tragen, in der vernetzten Teilschicht von 1 : 4 bis 4 : 1, vorzugsweise etwa 3:1, beträgt,

4. Artikel nach einem der vorstehenden Ansprüche, wobei der Vernetzer einen bifunktionellen Vernetzer umfasst.

5. Artikel nach einem der vorstehenden Ansprüche, wobei die vernetzte Teilschicht ein MG in dem Bereich von 5000 bis 400.000 Da, mehr bevorzugt von 10.000 bis 200.000 Da, aufweist.

6. Artikel nach einem der vorstehenden Ansprüche, wobei die Substratoberfläche negativ geladen ist und die vernetzte Teilschicht kationische Einheiten umfasst.

7. Artikel nach einem der vorstehenden Ansprüche, wobei die vernetzte Teilschicht quartäre Ammoniumeinheiten umfasst.

8. Artikel nach einem der vorstehenden Ansprüche, wobei die Polymerketten fluorierte Monomere, alkoxylierte Monomere und/oder Mischungen davon umfassen.

9. Artikel nach einem der vorstehenden Ansprüche, wobei der Artikel ein Nassrasierapparat oder ein Bestandteil davon ist.

10. Verfahren zum Herstellen eines Artikels, wobei der Artikel ein Rasierartikel oder eine Haarentfernungsvorrichtung ist, umfassend ein Substrat mit einer Außenpolymerbeschichtung, umfassend Polymerketten, das Verfahren umfassend die Schritte:
a. Bereitstellen eines Substrats, umfassend eine geladene Oberfläche;
b. Bereitstellen eines vernetzten Polymers, umfassend geladene Einheiten, die eine Ladung aufweisen, die der der geladenen Oberfläche entgegengesetzt ist; und Polymerisationsinitiierungseinheiten;
c. Aufbringen des vernetzten Polymers auf die Substratoberfläche;
d. Bereitstellen von Monomeren, die für eine Polymerisation mit den Polymerisationsinitiierungseinheiten reaktiv sind; und
e. Polymerisieren der Monomere mit den Polymerisationsinitiierungseinheiten;
wobei die geladenen Einheiten des vernetzten Polymers ionische Anziehung, Befestigungspunkte an die geladene Substratoberfläche ausbilden.

11. Verfahren nach Anspruch 10, wobei das Substrat in Schritt a. eine negative Oberflächenladung umfasst und die geladenen Einheiten des vernetzten Polymers quartäre Ammoniumeinheiten umfassen.

12. Verfahren nach einem der Ansprüche 10 bis 11, wobei Schritt c. ein Tauchbeschichten der Substratoberfläche in einer Lösung, Emulsion oder Dispersion, umfassend das vernetzte Polymer, beinhaltet.

13. Verfahren nach einem der Ansprüche 10 bis 12, wobei Polymerisationsschritt e. eine radikalische Atomübertragungspolymerisation beinhaltet.

14. Verfahren nach einem der Ansprüche 10 bis 13, wobei die Monomere fluorierte Polymere, vorzugsweise Pentafluorstyrol, Pentafluorpropyl(meth)acrylat, Trifluorethyl(meth)acrylat, Heptadecafluordecyl(meth)acrylat und/oder Mischungen davon umfassen.

## Revendications

1. Article, ledit article étant un article de rasage ou un dispositif d'épilation, comprenant,
un substrat ayant une surface chargée ; et
une couche polymère sur ladite surface de substrat ; ladite couche polymère comprenant,
une sous-couche réticulée comprenant des fragments chargés ayant une charge opposée à celle de ladite surface chargée ; et
une sur-couche comprenant des chaînes polymères greffées à partir de la sous-couche et s'étendant à l'opposé de ladite surface de substrat, les chaînes polymères étant de préférence des brosses polymères.

2. Article selon la revendication 1, dans lequel la sous-couche réticulée comprend :
de 5 à 94,5 % en poids de monomères portant au moins un fragment chargé ou un précurseur de celui-ci, de préférence un fragment cationique ou un précurseur de celui-ci, plus préférablement un fragment ammonium quaternaire ou un précurseur de celui-ci ;
de 5 à 90 % en poids de monomères portant au moins un fragment d'initiation de polymérisation ou au moins une chaîne polymère greffée à partir de ceux-ci ; et
de 0,5 à 5 % en poids d'un agent de réticulation.

3. Article selon une quelconque revendication précédente, dans lequel un rapport molaire de monomère portant un fragment chargé à la somme des monomères portant au moins un fragment d'initiation de polymérisation et des monomères portant au moins une chaîne polymère greffée à partir de celui-ci, dans la sous-couche réticulée, va de 1:4 à 4:1, de préférence est d'environ 3:1.

4. Article selon une quelconque revendication précédente, dans lequel l'agent de réticulation comprend un agent de réticulation bifonctionnel.

5. Article selon une quelconque revendication précédente, dans lequel la sous-couche réticulée a une Mw dans la plage allant de 5000 à 400 000 Da, plus préférablement de 10 000 à 200 000 Da.

6. Article selon une quelconque revendication précédente, dans lequel la surface de substrat est chargée négativement, et la sous-couche réticulée comprend des fragments cationiques.

7. Article selon une quelconque revendication précédente, dans lequel la sous-couche réticulée comprend des fragments ammonium quaternaire.

8. Article selon une quelconque revendication précédente, dans lequel les chaînes polymères comprennent des monomères fluorés, des monomères alcoxylés, et/ou des mélanges de ceux-ci.

9. Article selon une quelconque revendication précédente, l'article étant un rasoir de rasage humide ou un élément de celui-ci.

10. Procédé de fabrication d'un article, ledit article étant un article de rasage ou un dispositif d'épilation, comprenant un substrat comportant un revêtement polymère externe comprenant des chaînes polymères, le procédé comprenant les étapes consistant à :
a. fournir un substrat comprenant une surface chargée ;
b. fournir un polymère réticulé comprenant des fragments chargés ayant une charge opposée à celle de ladite surface chargée, et des fragments d'initiation de polymérisation ;
c. appliquer ledit polymère réticulé sur ladite surface de substrat ;
d. fournir des monomères réactifs pour la polymérisation avec les fragments d'initiation de polymérisation ; et
e. polymériser les monomères avec les fragments d'initiation de polymérisation ;
dans lequel lesdits fragments chargés de polymère réticulé forment des points d'attraction ionique de fixation à la surface de substrat chargée.

11. Procédé selon la revendication 10, dans lequel le substrat à l'étape a. comprend une charge de surface négative et les fragments chargés du polymère réticulé comprennent des fragments ammonium quaternaire.

12. Procédé selon l'une quelconque des revendications 10 à 11, dans lequel l'étape c. implique le revêtement par immersion de la surface de substrat dans une solution, une émulsion ou une dispersion comprenant le polymère réticulé.

13. Procédé selon l'une quelconque des revendications 10 à 12, dans lequel l'étape e. de polymérisation implique une polymérisation radicalaire par transfert d'atome.

14. Procédé selon l'une quelconque des revendications 10 à 13, dans lequel les monomères comprennent des polymères fluorés, de préférence pentafluorostyrène, (méth)acrylate de pentafluoropropyle, (méth)acrylate de trifluoroéthyle, (méth)acrylate d'heptadécafluorodécyle et/ou leurs mélanges.
